(19) Europäisches Patentamt
European Patent Office
Office européen des brevets

(11) **EP 2 875 271 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(51) Int Cl.:
***F16K 47/10*** *(2006.01)*      ***F16D 48/02*** *(2006.01)*

(21) Anmeldenummer: **13733253.2**

(22) Anmeldetag: **25.06.2013**

(86) Internationale Anmeldenummer:
**PCT/EP2013/063255**

(87) Internationale Veröffentlichungsnummer:
**WO 2014/012751 (23.01.2014 Gazette 2014/04)**

(54) **DROSSELEINHEIT FÜR EINEN DREHMOMENTBEGRENZER EINER REIBKUPPLUNG**

THROTTLE UNIT FOR A TORQUE LIMITER OF A FRICTION CLUTCH

UNITÉ D'ÉTRANGLEMENT POUR UN LIMITEUR DE COUPLE D'UN EMBRAYAGE À FRICTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2012 DE 102012212450**

(43) Veröffentlichungstag der Anmeldung:
**27.05.2015 Patentblatt 2015/22**

(73) Patentinhaber: **Schaeffler Technologies AG & Co. KG**
**91074 Herzogenaurach (DE)**

(72) Erfinder: **GRABENSTÄTTER, Jan**
**76593 Gernsbach (DE)**

(56) Entgegenhaltungen:
**EP-A1- 2 423 529**      **DE-A1- 19 811 337**
**DE-A1-102005 021 743**

**Beschreibung**

Die Erfindung betrifft eine Drosseleinheit für einen Drehmomentbegrenzer einer Reibkupplung, die dazu eingerichtet ist, ein möglichst schnelles Schalten der Reibkupplung zuzulassen und zugleich zu verhindern, dass durch zu schnelles Einrücken ein übermäßiges Drehmoment anliegt.

Aus dem Stand der Technik sind Hydraulikleitungen bekannt, bei denen eine Eingangsseite, die mit dem Nehmerzylinder verbunden ist, und einer Ausgangsseite, die mit dem Geberzylinder verbunden ist, mit einer Schaltblende versehen sind. Eine solche Schaltblende weist eine Vielzahl von Öffnungen auf, von denen zumindest eine zentral angeordnet ist. Wird der Nehmerzylinder ausgerückt, so fließt über die Ausgangsseite die hydraulische Flüssigkeit durch die Vielzahl der Öffnungen in die Eingangsseite und betätigt somit den Nehmerzylinder. Rückt hingegen der Nehmerzylinder ein und wird dabei, zum Beispiel infolge einer hohen Einrückgeschwindigkeit, das Druckgefälle über der Blende groß, so wird eine Feder, die die Blende von der Ausgangsseite beabstandet, komprimiert und somit ist nur die mindestens eine zentrale Öffnung durchströmbar, wodurch die Rückströmung verlangsamt wird. Nachteilig ist hierbei, dass die Federkraft als Gegenspieler zum Druckgefälle einen erheblichen Einfluss auf das Schaltverhalten des Blendenkörpers hat. Federn unterliegen häufig großen Schwankungen in ihrem Verhältnis zwischen Länge und Kraft, wodurch bei Hydraulikleitungen des Standes der Technik ein spürbarer Unterschied entstehen kann. Insbesondere bei Systemen, die gegenüber der Ausrückkraft grenzwertig ausgelegt sind, ist die Toleranz der Federkraft nicht vernachlässigbar.

Aus der DE 198 11 337 A1 ist eine Drosseleinheit gemäß dem Obergriff von Anspruch 1 bekannt.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.

Die Erfindung betrifft eine Drosseleinheit für einen Drehmomentbegrenzer einer hydraulischen Reibkupplung, welche die folgenden Komponenten aufweist:

einen Eingang für ein Fluid, der mit einem Ausgang strömungsverbunden ist;
ein Gehäuse zur Aufnahme einer Blende und eines elastischen Elements, wobei das Gehäuse zwischen dem Eingang und dem Ausgang angeordnet ist,

wobei die Blende zumindest eine Hauptöffnung und wenigstens eine Nebenöffnung aufweist, und wobei die Blende an eine Mündung des Ausgangs bringbar ist, sodass eine Strömungsverbindung zwischen Eingang und Ausgang nur durch die zumindest eine Hauptöffnung vorliegt, oder durch das elastische Element von der Mündung beabstandet ist. Die Drosseleinheit ist dadurch gekennzeichnet, dass weiterhin eine Hülse vorgesehen ist, die ein Gegenlager für das elastische Element bildet, wobei die Hülse zum Verspannen des elastischen Elements justierbar ist.

Die Drosseleinheit ist dazu eingerichtet, übermäßige (dynamische) Druckgefälle zu verhindern, so dass zum einen die hydraulischen Elemente nicht beschädigt werden und zum anderen ein zu abruptes Schaltverhalten der Reibkupplung unterbunden wird. Der Drehmomentbegrenzer erlaubt es dem Nehmerzylinder, entgegen der Schaltkraft vom Geberzylinder, verlangsamt einzurücken und so ein Anliegen eines übermäßigen Drehmoments zu verhindern. Dieser Vorgang ist meistens ruckartig, so dass die daraus folgende Geschwindigkeit der hydraulischen Flüssigkeit über die Drosseleinheit reduziert werden soll. Hierzu ist zwischen dem Eingang und dem Ausgang eine Blende mit einer Hauptöffnung und wenigstens einer Nebenöffnung vorgesehen. Diese Blende wird durch ein elastisches Element mit einer Vorspannkraft gegen einen eingangsseitigen Anschlag gepresst. Somit liegt die Blende mit einem Abstand zur Mündung, wenn der eingangsseitige Druck zumindest geringer ist als der ausgangsseitige Druck plus die Vorspannkraft. Im Zustand derart ausgeglichener Druckverhältnisse und auch beim Einrücken des Nehmerzylinders, also einem höheren (dynamischen) Druck am Ausgang als am Eingang, wird die Blende von der Mündung des Ausgangs derart beabstandet, dass ein Blendenraum zwischen der Blende und der Mündung entsteht. Somit sind sowohl die zumindest eine Hauptöffnung als auch die wenigstens eine Nebenöffnung von der Mündung zum Eingang, und umgekehrt, durchströmbar. Im rückwärtigen Fall, in dem der (dynamische) Druck in dem Eingang größer ist als in dem Ausgang plus die Vorspannkraft, wird die Blende in Richtung Ausgang entgegen der Vorspannkraft gegen die Mündung gedrückt, so dass allein die zumindest eine Hauptöffnung eine Strömung vom Eingang zum Ausgang erlaubt. Damit wird das Strömungsvolumen pro Zeit deutlich begrenzt und eine Beschädigung der hydraulischen Komponenten verhindert. Die Blende ist dabei in einem Gehäuse angeordnet, in dem das elastische Element die Vorspannkraft auf die Blende ausübt. Die Vorspannkraft ist ein maßgeblicher Faktor bei der Charakteristik der Drosseleinheit. Um die Vorspannkraft des elastischen Elements exakt einstellen zu können, ist weiterhin eine Hülse vorgesehen, die ein Gegenlager für das elastische Element bildet und somit die Blende in Normalfall von dem Ausgang beabstandet. Diese Hülse ist bei der Montage justierbar, sodass eine erwünschte Federkraft des elastischen Elements eingestellt werden kann. Die Hülse kann beispielsweise in das Gehäuse eingeschraubt werden oder mittels eines Presssitzes soweit eingeschoben werden bis die erforderliche Vorspannkraft des elastischen Elements erzeugt worden ist. Auch kann die Hülse eine definierte Montageposition haben und mehrstückig aufgebaut sein und zum Beispiel durch Scheiben eine erwünschte Vorspannkraft, zumindest stufenweise, einstellbar ist. Die Vorspannkraft des elastischen Elements kann im Betrieb über ein dynamisches Druckgefälle vom Eingang zum Ausgang überwunden werden und durch weitere Elemente, wie zum Beispiel Magnetschaltungen, erreicht werden.

In einer weiteren Ausführungsform der Drosseleinheit ist das Gehäuse von einem Außengehäuse so umgeben, dass ein Kanal zwischen dem Gehäuse und dem Außengehäuse gebildet ist, und wobei infolge eines Druckgefälles zwischen dem Eingang und dem Ausgang mittels des Gehäuses der Kanal öffenbar und schließbar ist.

Das Gehäuse wird in dem Außengehäuse geführt, wobei in der Führung des Gehäuses Aussparungen vorgesehen sind, so dass sie für das hydraulische Fluid durchströmbar sind. Beispielsweise weist das Außengehäuse oder das Gehäuse eine Verzahnung auf, so dass eine Vielzahl von Strömungsverbindungen über den Umfang um das Gehäuse herum den Kanal bildet. Wird das Druckgefälle zwischen dem Ausgang und dem Eingang infolge einer Druckerhöhung auf der Ausgangsseite oder einem Druckabfall auf der Eingangsseite groß, so verschiebt sich das Gehäuse in dem Außengehäuse und gibt den Kanal frei. Somit ist eine Strömungsverbindung zwischen dem Ausgang und dem Eingang nicht allein über die zumindest eine Hauptöffnung und die wenigstens eine Nebenöffnung gegeben, sondern auch über den Kanal zwischen dem Gehäuse und dem Außengehäuse. Infolgedessen kann der Nehmerzylinder schnell betätigt werden, ohne dass eine übermäßig schnelle Strömungsgeschwindigkeit in Richtung Nehmerzylinder möglich ist.

In einer weiteren Ausführungsform der Drosseleinheit ist die Hülse in dem Gehäuse fixiert und weist eine durchströmbare Öffnung auf, die eine Strömungsverbindung zu dem Kanal bildet.

Die Hülse, die ein justierbares Gegenlager für das elastische Element bildet, ist vorteilhafter Weise hinter der Auslassöffnung des Ausgangs angeordnet, so dass die Hülse einen Zugang zu dem Kanal zwischen dem Gehäuse und dem Außengehäuse versperren würde, sofern nicht eine Öffnung darin vorgesehen ist. Durch diese Öffnung ist es möglich, eine vormontierbare Baugruppe bestehend aus dem Gehäuse, der Blende, dem elastischen Element und der Hülse zu bilden, welche anschließend nur in das Außengehäuse eingesetzt werden muss.

In einer weiteren Ausführungsform der Drosseleinheit weist die wobei die Blende eine erste anströmbare Fläche während eines ersten Schaltzustands aufweist, während dessen die Blende an der Mündung anliegt, und eine zweite anströmbare Fläche während eines zweiten Schaltzustands aufweist, während dessen die Blende von der Mündung abgehoben ist, wobei das Verhältnis der ersten anströmbaren Fläche zu der zweiten anströmbaren Fläche kleiner 0,5 ist, und insbesondere kleiner oder gleich 0,25 ist, wobei bevorzugt eine Hauptöffnung und zwei Nebenöffnungen vorgesehen sind.

Die zweite anströmbare Fläche in dem zweiten Schaltzustand, wenn die Blende vom Gehäuse abhebt, ergibt sich aus der Differenz der Außenquerschnittfläche der Blende zur durchströmbaren Fläche. Die erste anströmbare Fläche in dem zweiten Schaltzustand, wenn die Blende auf dem Gehäuse aufliegt, ergibt sich aus der Differenz der zum Eingang hin freiliegenden Fläche der Blende zur durchströmbaren Fläche. Im Stand der Technik war es notwendig, eine große zweite anströmbare Fläche zu bilden, damit die erwünschte Charakteristik der Drosseleinheit erreicht werden konnte. Mit der hier vorgeschlagenen Drosseleinheit ist es aber möglich, die erste anströmbare Fläche der Blende gering zu halten. Hierdurch kann bei einer zum Stand der Technik unveränderten zweiten anströmbaren Fläche im abgehobenen Zustand auf eine enge Toleranz zwischen der Hülse und der Blende verzichtet werden. Der maximal erlaubte Druckabfall ($\Delta p_{max}$) über den Spalt ist nämlich reziprok abhängig von dem Verhältnis zwischen der ersten (aufliegend) anströmbaren Fläche ($A_1$) und der zweiten (abgehobenen) anströmbaren Fläche ($A_2$):

$$\Delta p_{\max} = \Delta p \left( 1 - \frac{A_1}{A_2} \right)$$

Somit ist es möglich, mit geringeren Fertigungstoleranzen eine verbesserte Charakteristik der Drosseleinheit zu erreichen.

In einer weiteren Ausführungsform der Drosseleinheit ist die Blende in dem Gehäuse rotatorisch fixiert.

Durch die rotatorische Fixierung zum Beispiel durch eine entsprechende Nut und Passform in Gehäuse und Blende ist es möglich, die Anordnung der zumindest einen Hauptöffnung und wenigstens einen Nebenöffnung auf eine Öffnung des Gehäuses dauerhaft zu positionieren.

In einer weiteren vorteilhaften Ausführungsform der Drosseleinheit ist die Mündung in den Eingang eingeschoben und mit einer Dichtung abgedichtet, wobei das Gehäuse mittels der Dichtung ausgangsseitig abdichtbar ist.

Vorteilhafterweise ist die Mündung in den Eingang eingeschoben und über eine Dichtung, zum Beispiel einen Dichtring, statisch abgedichtet. Das Gehäuse kann dabei gegen diese Dichtung gedrückt werden, so dass es ausgangsseitig abdichtbar ist. Hierdurch wird ohne zusätzliche Bauteile erreicht, dass die zusätzlich ein Überströmen der hydraulischen Flüssigkeit außerhalb des Gehäuses zuschaltbar ist.

In einer weiteren vorteilhaften Ausführungsform der Drosseleinheit verjüngen sich die zumindest eine Hauptöffnung und die wenigstens eine Nebenöffnung von der Eingangsseite zur Ausgangsseite.

Durch die Verjüngung der zumindest einen Hauptöffnung und der wenigstens einen Nebenöffnung werden bei einem Überdruck von der Eingangsseite zur Eingangsseite die Drosseleffekte minimiert, weil die zu durchströmende Tiefe der Blende im engsten Querschnitt verringert wird. Durch den Drosseleffekt werden Druckabfälle erzeugt, die von der Viskosität und somit der Temperatur, der Flüssigkeit abhängig sind. Druckabfälle an (idealen) Blenden werden hingegen nicht von der Viskosität beeinflusst. Hierdurch ergibt sich eine gleichbleibende Schaltcharakteristik der Blende über die Temperatur.

Gemäß einem weiteren Aspekt der Erfindung wird auch eine Reibkupplung zum lösbaren Verbinden einer Abtriebswelle mit einem Antriebsstrang mit einem hydraulischen Rücksystem vorgeschlagen, welches einen Nehmerzylinder, einen Geberzylinder und eine Drosseleinheit nach der obigen Beschreibung aufweist, wobei der Eingang zum Nehmerzylinder und der Ausgang zum Geberzylinder gerichtet ist.

Über die Abtriebswelle wird von einer Antriebseinheit ein Drehmoment abgegeben, welches von dem Antriebsstrang in eine Bewegung oder Kraft umgewandelt wird. Die Reibkupplung stellt eine Verbindung zwischen der Abtriebswelle und dem Antriebsstrang her beziehungsweise macht diese Verbindung lösbar. Dieses Lösen beziehungsweise Schalten der Reibkupplung wird über ein hydraulisches Rücksystem umgesetzt. Dieses Rücksystem trennt oder verbindet die Reibpartner des Reibpakets der Reibkupplung, so dass ein Drehmoment übertragen wird oder getrennt wird. Dazu weist das hydraulische Rücksystem einen Nehmerzylinder auf, welcher auf das Reibpaket wirkt, und weiterhin einen Geberzylinder, welcher die gewünschte Schaltkraft erzeugt. Zwischen dem Nehmerzylinder und dem Geberzylinder ist eine Drosseleinheit nach der obigen Beschreibung vorgesehen, so dass der Volumenstrom beim Durchströmen begrenzt wird. Gibt der Geberzylinder einen erhöhten Druck vor, so liegt ein positives Druckgefälle vom Ausgang hin zum Eingang vor. Hierdurch liegt die Blende beabstandet von der Mündung des Ausgangs und ist durch alle Öffnungen durchströmbar. In einer vorteilhaften Ausführungsform wird ebenfalls das Gehäuse zurückgedrückt, so dass der Kanal zwischen dem Gehäuse und dem Außengehäuse freigegeben ist und die Durchströmung keine wesentliche Vergrößerung des positiven Druckgefälles erzeugt. Liegt ein negativer Druck an, das heißt am Eingang beziehungsweise am Nehmerzylinder ein erhöhter Druck gegenüber dem Ausgang beziehungsweise Geberzylinder, so wird in der bevorzugten Ausführungsform das Gehäuse zurückgedrückt, so dass der Kanal zwischen dem Gehäuse und dem Außengehäuse geschlossen wird. Darüber hinaus wird die Blende bei Überwindung der Vorspannkraft des elastischen Elements derart zurückgedrückt, dass nur noch die zumindest eine Hauptöffnung durchströmbar ist. Sinkt das negative Druckgefälle wieder ab und wird die Kraft des elastischen Elements größer, so rückt die Blende wieder von dem Ausgang ab und die Öffnungen sind wieder alle durchströmbar. Hierdurch wird erreicht, dass ein übermäßiges negatives Druckgefälle stark gedrosselt wird und zugleich ein schnelles Einrücken des Nehmerzylinders möglich ist.

Gemäß einem weiteren Aspekt der Erfindung wird auch ein Kraftfahrzeug vorgeschlagen, das eine Antriebseinheit mit einer Abtriebswelle, einen Antriebsstrang und eine Reibkupplung gemäß der obigen Beschreibung aufweist, wobei die Antriebseinheit im Kraftfahrzeug vor einer Fahrerkabine und quer zu einer Längsachse des Kraftfahrzeugs angeordnet ist.

Hydraulische Reibkupplungen sind insbesondere bei Kraftfahrzeugen von geringer Größe zum Beispiel Kleinwagen von Vorteil. Um bei kleiner Baugröße der Reibkupplung dennoch ein gutes Schaltverhalten der Reibkupplung zu erreichen, ist es vorteilhaft, die hier vorgeschlagene Drosseleinheit einzusetzen.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Kupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Drosseleinheit erlaubt auf kleinem Bauraum eine Kupplung mit geringen Spaltmaßen, weil die Drosseleinheit ein sehr präzises Schalten der Kupplung ermöglicht. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:

Fig. 1:     eine Drosseleinheit im Schnitt,

Fig. 2:     ein Gehäuse mit Blende in Vorderansicht,

Fig. 3:     ein Gehäuse mit Blende wie in Fig. 1 in einem um 90° gedrehten Schnitt,

Fig. 4:     einen Drehmomentbegrenzer, und

Fig. 5:     ein Kraftfahrzeug.

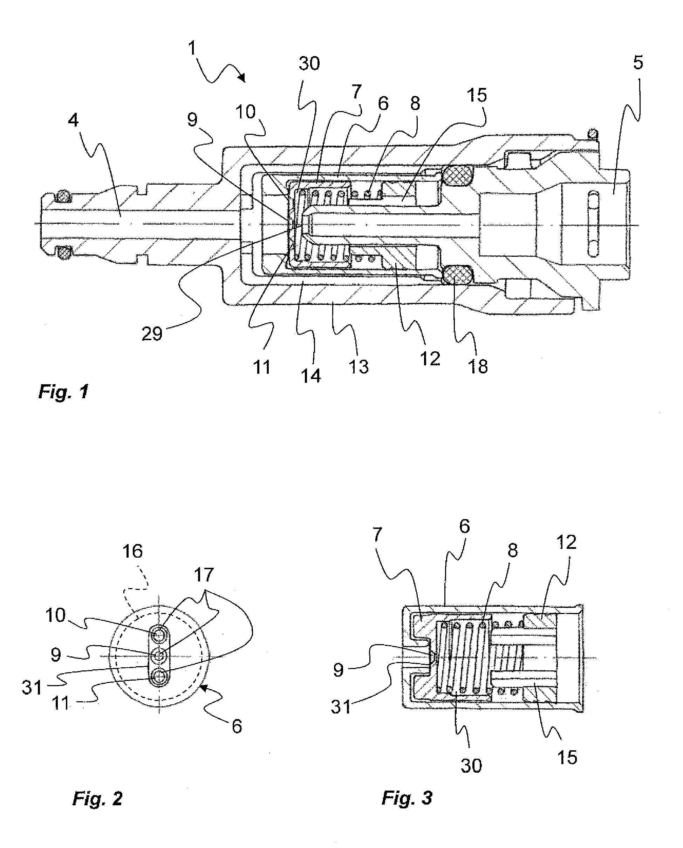

In Fig. 1 ist eine Drosseleinheit 1 mit einem Eingang 4 und einem Ausgang 5 gezeigt, zwischen denen ein Gehäuse 6 mit einer Blende 7 vorgesehen ist. Die Blende 7 weist eine zentrale Hauptöffnung 9 und zwei Nebenöffnungen 10, 11 auf. Die Blende 7 wird mittels des elastischen Elements 8 gegen einen Anschlag des Gehäuses gedrückt, wobei eine Hülse 12 das Gegenlager für das elastische Element 8 bildet. In dieser Darstellung ist die Hülse 12 durch einen Presssitz in das Gehäuse 6 eingeschoben, bis eine erforderliche Vorspannung des elastischen Elements 8 erzeugt ist. Die Blende 7 ist von einer Mündung 29 des Ausgangs 5 beanstandet, sodass ein Blendenraum 30 entsteht. Mittels des Blendenraums 30 sind die Nebenöffnungen 10, 11 ebenfalls mit dem Ausgang 5 über die Mündung 29 strömungsverbunden. Wird hingegen die Vorspannkraft des elastischen Elements 8, zum Beispiel durch einen eingangsseitig höheren dynamischen Druck, überwunden, so wird die Blende 7 gegen die Mündung 29 gedrückt, sodass allein die Hauptöffnung 9 mit dem Ausgang 5 über die Mündung strömungsverbunden ist. Dieses Druckgefälle liegt nur in einem dynamischen Schaltzustand der Drosseleinheit 1 vor.

Das Gehäuse 6 ist in dem Außengehäuse 13 untergebracht, wobei ein Kanal 14 zwischen dem Gehäuse 6 und dem Außengehäuse 13 gebildet ist. In dem dargestellten Zustand ist der Kanal 14 mittels Anliegen des Gehäuses 6 an der Dichtung 18 des Ausgangs 5 verschlossen. Durch die durchströmbare Öffnung 15 in der Hülse 12 kann bei einem (dynamischem) Druck auf der Seite des Ausgangs 5 das Gehäuse 6 in Richtung Eingang 4 verschoben werden, so dass der Kanal 14 geöffnet wird und die hydraulische Flüssigkeit durch die durchströmbare Öffnung 15 durch den Kanal 14 zum Eingang 4 vorbeiströmen kann. Bei dem oben beschriebenen umgekehrten Druckgefälle wird das Gehäuse 6 gegen die Dichtung 18 gepresst, so dass der Kanal 14 verschlossen ist.

In Fig. 2 ist eine Vorderansicht auf das Gehäuse 6, wobei die Hauptöffnung 9 und die erste Nebenöffnung 10 und zweite Nebenöffnung 11 der Blende 7 sichtbar sind. Die Hauptöffnung 9, die erste Nebenöffnung 10 und die zweite Nebenöffnung 11 bilden durchströmbare Fläche 17. In dieser Ansicht ist eine zweite Fläche 16 der Blende 7 durch das Gehäuse 6 verdeckt und daher gestrichelt dargestellt. Diese zweite Fläche 16 wird im angehobenen zweiten Schaltzustand der Blende 7 angeströmt. Im anliegenden ersten Schaltzustand wird nur eine erste anströmbare Fläche 31 der Blende 7 angeströmt, welche von dem Gehäuse 6 freigegeben ist.

In Fig. 3 ist das Gehäuse 6 mit der Blende 7 aus der Fig. 1 gezeigt in einer um 90° gedrehten Schnittansicht. Hierbei ist zu erkennen, dass die Blende 7 in dem Gehäuse 6 gegen Verdrehung gesichert gelagert ist und dass das Verhältnis der zum Eingang 4 hin freiliegenden Fläche, das heißt der ersten anströmbaren Fläche 31, der Blende 7 in der am Gehäuse 6 anliegenden Stellung zu der vom Gehäuse abgehobener Stellung gering ist.

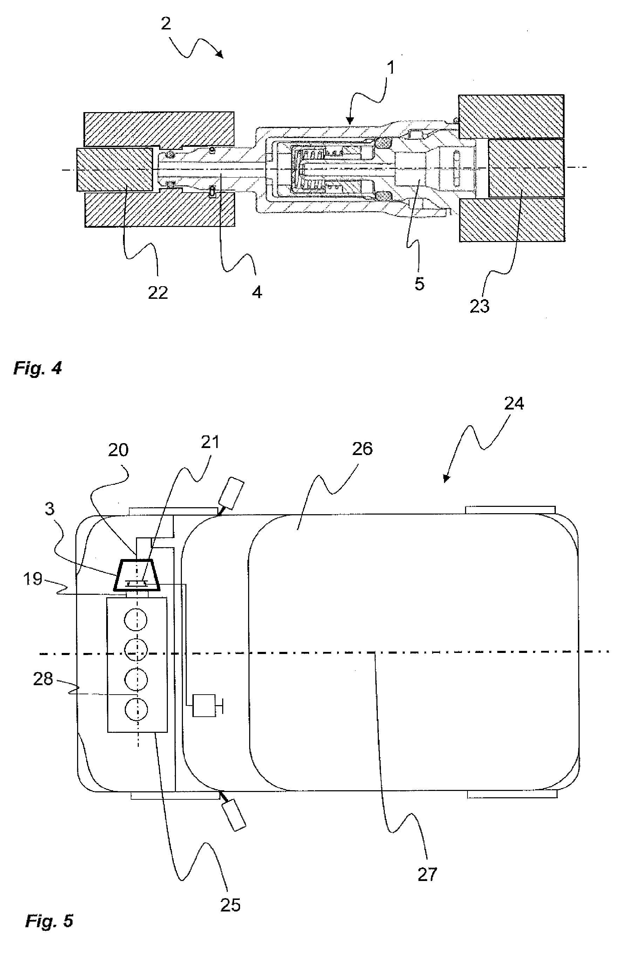

In Fig. 4 ist ein Drehmomentbegrenzer 2 schematisch dargestellt, der zentral die Drosseleinheit 1 zum Beispiel gemäß der Fig. 1 aufweist. Hierbei ist der Eingang 4 mit dem Nehmerzylinder 22 verbunden und der Ausgang 5 mit dem Geberzylinder 23.

In Fig. 5 ist ein Kraftfahrzeug 24 mit einer Antriebseinheit 25 gezeigt, die über eine Antriebswelle 19 mittels einer Reibkupplung 3 mit einem rein schematisch dargestellten Antriebsstrang 20 verbunden ist. Hierbei ist die Antriebseinheit 25 vor der Fahrerkabine 26 des Kraftfahrzeugs 24 mit der Motorachse 28 quer zur Längsachse 27 des Kraftfahrzeugs 24 angeordnet. Die Reibkupplung 3 weist ein hydraulisches Rücksystem 21 auf, welches eine Drosseleinheit 1 (nicht dargestellt) umfassen kann. Durch die Drosseleinheit 1 ist es möglich trotz kleiner Querschnitte ausreichende Schaltdrücke und Schaltgeschwindigkeiten einzustellen bei gleichzeitiger Drehmomentbegrenzung, sodass eine Reibkupplung 3 mit geringerer Baugröße eingesetzt werden kann.

Mit der hier vorgeschlagenen Drosseleinheit ist es möglich, den Federtoleranzbereich auszugleichen, die Blende und das Gehäuse mit einem größeren Spiel zu versehen und zugleich ein schnelles Ausrücken des Nehmerzylinders aufgrund eines großen Durchströmungsvolumens mit Hilfe des Kanals zwischen dem Außengehäuse und dem Gehäuse zu erreichen, ohne dass ein größerer Bauraum erforderlich ist.

**Bezugszeichenliste**

1      Drosseleinheit
2      Drehmomentbegrenzer
3      Reibkupplung
4      Eingang
5      Ausgang
6      Gehäuse
7      Blende
8      elastisches Element
9      Hauptöffnung

10 erste Nebenöffnung
11 zweite Nebenöffnung
12 Hülse
13 Außengehäuse
14 Kanal
15 durchströmbare Öffnung
16 zweite anströmbare Fläche im abgehobenen zweiten Schaltzustand
17 durchströmbare Fläche
18 Dichtung
19 Abtriebswelle
20 Antriebsstrang
21 hydraulisches Rücksystem
22 Nehmerzylinder
23 Geberzylinder
24 Kraftfahrzeug
25 Antriebseinheit
26 Fahrerkabine
27 Längsachse
28 Motorachse
29 Mündung
30 Blendenraum
31 erste anströmbare Fläche im anliegenden ersten Schaltzustand

**Patentansprüche**

1. Drosseleinheit (1) für einen Drehmomentbegrenzer (2) einer Reibkupplung (3), aufweisend die folgenden Komponenten:

   einen Eingang (4) für ein Fluid, der mit einem Ausgang (5) über eine Mündung (29) strömungsverbunden ist;
   ein Gehäuse (6) zur Aufnahme einer Blende (7) und eines elastischen Elements (8), wobei das Gehäuse (6) zwischen dem Eingang (4) und dem Ausgang (5) angeordnet ist, wobei die Blende (7) zumindest eine Hauptöffnung (9) und wenigstens eine Nebenöffnung (10,11) aufweist, und wobei die Blende (7) an eine Mündung (29) des Ausgangs (5) bringbar ist, sodass eine Strömungsverbindung zwischen Eingang (4) und Ausgang (5) nur durch die zumindest eine Hauptöffnung (9) vorliegt, oder durch das elastische Element (8) von der Mündung (29) beabstandet ist **dadurch gekennzeichnet, dass** weiterhin eine Hülse (12) vorgesehen ist, die ein Gegenlager für das elastische Element (8) bildet, wobei die Hülse (12) zum Verspannen des elastischen Elements (8) justierbar ist.

2. Drosseleinheit (1) nach Anspruch 1, wobei das Gehäuse (6) von einem Außengehäuse (13) so umgeben ist, dass ein Kanal (14) zwischen dem Gehäuse (6) und dem Außengehäuse (13) gebildet ist, und wobei infolge eines Druckgefälles zwischen dem Eingang (4) und dem Ausgang (5) mittels des Gehäuses (6) der Kanal (14) öffenbar und schließbar ist.

3. Drosseleinheit (1) nach Anspruch 2, wobei die Hülse (12) in dem Gehäuse (6) fixiert ist und eine durchströmbare Öffnung (15) aufweist, die eine Strömungsverbindung zu dem Kanal (14) bildet.

4. Drosseleinheit (1) nach einem der vorhergehenden Ansprüche, wobei die Blende (7) eine erste anströmbare Fläche (31) während eines ersten Schaltzustands aufweist, während dessen die Blende (7) an der Mündung (29) anliegt, und eine zweite anströmbare Fläche (16) während eines zweiten Schaltzustands aufweist, während dessen die Blende (7) von der Mündung (29) abgehoben ist, wobei das Verhältnis der ersten anströmbaren Fläche (31) zu der zweiten anströmbaren Fläche (16) kleiner 0,5 ist, und insbesondere kleiner oder gleich 0,25 ist, wobei bevorzugt eine Hauptöffnung (9) und zwei Nebenöffnungen (10,11) vorgesehen sind.

5. Drosseleinheit (1) nach einem der vorhergehenden Ansprüche, wobei die Blende (7) in dem Gehäuse (6) rotatorisch fixiert ist.

6. Drosseleinheit (1) nach einem der vorhergehenden Ansprüche, bei der die Mündung (29) in den Eingang (4) eingeschoben ist und mit einer Dichtung (18) abgedichtet ist, wobei das Gehäuse (6) mittels der Dichtung (18) ausgangsseitig abdichtbar ist.

7. Drosseleinheit (1) nach einem der vorhergehenden Ansprüche, wobei sich die zumindest eine Hauptöffnung (9) und die wenigstens eine Nebenöffnung (10,11) von dem Eingang (4) zum Ausgang (5) verjüngen.

8. Reibkupplung (3) zum lösbaren Verbinden einer Abtriebswelle (19) mit einem Antriebsstrang (20) mit einem hydraulischen Rücksystem (21), aufweisend einen Nehmerzylinder (22), einen Geberzylinder (23) und eine Drosseleinheit (1) nach einem der vorhergehenden Ansprüche, wobei der Eingang (4) zum Nehmerzylinder (22) und der Ausgang (5) zum Geberzylinder (23) gerichtet ist.

9. Kraftfahrzeug (24) aufweisend eine Antriebseinheit (25) mit einer Abtriebswelle (19), einen Antriebsstrang (20) und eine Reibkupplung (3) nach Anspruch 8, wobei die Antriebseinheit (25) im Kraftfahrzeug (24) vor einer Fahrerkabine (26) und quer zu einer Längsachse (27) des Kraftfahrzeugs (24) angeordnet ist.

## Claims

1. Throttle unit (1) for a torque limiter (2) of a friction clutch (3), having the following components:

   an inlet (4) for a fluid, which inlet (4) is flow-connected to an outlet (5) via an orifice (29); a housing (6) for receiving an orifice plate (7) and an elastic element (8), the housing (6) being arranged between the inlet (4) and the outlet (5), the orifice plate (7) having at least one main opening (9) and at least one auxiliary opening (10, 11), and it being possible for the orifice plate (7) to be attached to an orifice (29) of the outlet (5), with the result that there is a flow connection between the inlet (4) and the outlet (5) only through the at least one main opening (9), or the said orifice plate (7) being spaced apart from the orifice (29) by way of the elastic element (8), **characterized in that** a sleeve (12) is provided, furthermore, which forms a counterbearing for the elastic element (8), the sleeve (12) being adjustable in order to brace the elastic element (8).

2. Throttle unit (1) according to Claim 1, the housing (6) being surrounded by an outer housing (13) in such a way that a channel (14) is formed between the housing (6) and the outer housing (13), and it being possible for the channel (14) to be opened and closed as a consequence of a pressure gradient between the inlet (4) and the outlet (5) by means of the housing (6).

3. Throttle unit (1) according to Claim 2, the sleeve (12) being fixed in the housing (6) and having an opening (15) through which flow can pass and which forms a flow connection to the channel (14).

4. Throttle unit (1) according to one of the preceding claims, the orifice plate (7) having a first surface (31) which can be flowed onto during a first switching state, during which the orifice plate (7) bears against the orifice (29), and having a second surface (16) which can be flowed onto during a second switching state, during which the orifice plate (7) is raised up from the orifice (29), the ratio of the first surface (31) which can be flowed onto to the second surface (16) which can be flowed onto being less than 0.5 and, in particular, less than or equal to 0.25, a main opening (9) and two auxiliary openings (10, 11) preferably being provided.

5. Throttle unit (1) according to one of the preceding claims, the orifice plate (7) being fixed rotationally in the housing (6).

6. Throttle unit (1) according to one of the preceding claims, in which the orifice (29) is pushed into the inlet (4) and is sealed by way of a seal (18), it being possible for the housing (6) to be sealed on the outlet side by means of the seal (18).

7. Throttle unit (1) according to one of the preceding claims, the at least one main opening (9) and the at least one auxiliary opening (10, 11) tapering from the inlet (4) to the outlet (5).

8. Friction clutch (3) for releasably connecting an output shaft (19) to a drive train (20) by way of a hydraulic engaging system (21), having a slave cylinder (22), a master cylinder (23) and a throttle unit (1) according to one of the preceding claims, the inlet (4) being directed towards the slave cylinder (22) and the outlet (5) being directed towards the master cylinder (23).

9. Motor vehicle (24) having a drive unit (25) with an output shaft (19), a drive train (20) and a friction clutch (3) according to Claim 8, the drive unit (25) being arranged in the motor vehicle (24) in front of a driver's cab (26) and transversely with respect to a longitudinal axis (27) of the motor vehicle (24).

## Revendications

1. Unité d'étranglement (1) pour limiteur de couple (2) d'un embrayage à friction (3), présentant les composants suivants :

   une entrée (4) pour un fluide, qui est en liaison fluidique avec une sortie (5) par le biais d'une embouchure (29) ; un boîtier (6) pour recevoir un diaphragme (7) et un élément élastique (8), le boîtier (6) étant disposé entre l'entrée (4) et la sortie (5), le diaphragme (7) présentant au moins une ouverture principale (9) et au moins une ouverture secondaire (10, 11), et le diaphragme (7) pouvant être monté au niveau d'une embouchure (29) de la sortie (5), de telle sorte qu'une liaison fluidique entre l'entrée (4) et la sortie (5) n'ait lieu que par le biais de l'au moins une ouverture principale (9), ou soit espacée de l'embouchure (29) par l'élément élastique (8), **caractérisée en ce qu'**il est en outre prévu un manchon (12) qui forme un contre-palier pour l'élément élastique (8), le manchon (12) pouvant être ajusté pour serrer l'élément élastique (8).

2. Unité d'étranglement (1) selon la revendication 1, dans laquelle le boîtier (6) est entouré par un boîtier extérieur (13) de telle sorte qu'un canal (14) entre le boîtier (6) et le boîtier extérieur (13) soit formé, et dans laquelle, du fait d'un gradient de pression entre l'entrée (4) et la sortie (5), le canal (14) peut être ouvert et fermé au moyen du boîtier (6).

3. Unité d'étranglement (1) selon la revendication 2, dans laquelle le manchon (12) est fixé dans le boîtier (6) et présente une ouverture (15) pouvant être traversée par l'écoulement, laquelle forme une liaison fluidique avec le canal (14).

4. Unité d'étranglement (1) selon l'une quelconque des revendications précédentes, dans laquelle le diaphragme (7) présente une première surface (31) pouvant recevoir l'écoulement dans un premier état de commutation, durant lequel le diaphragme (7) s'applique contre l'embouchure (29), et une deuxième surface (16) pouvant recevoir l'écoulement dans un deuxième état de commutation durant lequel le diaphragme (7) est soulevé de l'embouchure (29), le rapport de la première surface (31) pouvant recevoir l'écoulement à la deuxième surface (16) pouvant recevoir l'écoulement étant inférieur à 0,5, et en particulier étant inférieur ou égal à 0,25, une ouverture principale (9) et deux ouvertures secondaires (10, 11) étant de préférence prévues.

5. Unité d'étranglement (1) selon l'une quelconque des revendications précédentes, dans laquelle le diaphragme (7) est fixé à rotation dans le boîtier (6).

6. Unité d'étranglement (1) selon l'une quelconque des revendications précédentes, dans laquelle l'embouchure (29) est enfoncée dans l'entrée (4) et est étanchéifiée au moyen d'un joint d'étanchéité (18), le boîtier (6) pouvant être étanchéifié du côté de la sortie au moyen du joint d'étanchéité (18).

7. Unité d'étranglement (1) selon l'une quelconque des revendications précédentes, dans laquelle l'au moins une ouverture principale (9) et l'au moins une ouverture secondaire (10, 11) se rétrécissent depuis l'entrée (4) jusqu'à la sortie (5).

8. Embrayage à friction (3) pour la connexion amovible d'un arbre de prise de force (19) à une chaîne cinématique (20) comprenant un système de recirculation hydraulique (21) présentant un cylindre récepteur (22), un maître-cylindre (23) et une unité d'étranglement (1) selon l'une quelconque des revendications précédentes, dans lequel l'entrée (4) est orientée vers le cylindre récepteur (22) et la sortie (5) est orientée vers le maître-cylindre (23).

9. Véhicule automobile (24) présentant une unité d'entraînement (25) avec un arbre de prise de force (19), une chaîne cinématique (20) et un embrayage à friction (3) selon la revendication 8, l'unité d'entraînement (25) dans le véhicule automobile (24) étant disposée avant une cabine de conducteur (26) et transversalement à un axe longitudinal (27) du véhicule automobile (24).

**Fig. 1**

**Fig. 2**

**Fig. 3**

**Fig. 4**

**Fig. 5**

**IN DER BESCHREIBUNG AUFGEFÜHRTE DOKUMENTE**

**In der Beschreibung aufgeführte Patentdokumente**

- DE 19811337 A1